(19) Europäisches Patentamt
European Patent Office
Office européen des brevets

(11) **EP 4 776 519 A1**

(12) **EUROPEAN PATENT APPLICATION**

(43) Date of publication:
**15.07.2026 Bulletin 2026/29**

(21) Application number: **25226918.8**

(22) Date of filing: **23.12.2025**

(51) International Patent Classification (IPC):
*H04B 5/26* (2024.01)   *H04B 5/79* (2024.01)
*H04B 1/59* (2006.01)   *H02J 50/10* (2016.01)
*H04B 5/40* (2024.01)

(52) Cooperative Patent Classification (CPC):
**H02J 50/10; H04B 5/26; H04B 5/40; H04B 5/79**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.01.2025 US 202519013371**

(71) Applicant: **NXP B.V.
5656 AG Eindhoven (NL)**

(72) Inventors:
• **Haslinger, Dorian
5656AG Eindhoven (NL)**
• **Neophytou, Kyriakos
5656AG Eindhoven (NL)**

(74) Representative: **Krott, Michel
NXP Semiconductors
Intellectual Property Group
High Tech Campus 60
5656 AG  Eindhoven (NL)**

(54) **WIRELESS COMMUNICATIONS DEVICE**

(57)     One example discloses a wireless communications device, including: a first receiver input configured to be coupled to a first end of an antenna and a first end of a sense resistor; wherein the sense resistor is coupled in series with the antenna; a second receiver input configured to be coupled to a second end of the sense resistor; a controller configured to determine an antenna current (Iant) flowing through the antenna based on a voltage between the first receiver input and the second receiver input; wherein the controller is configured to increase the antenna current if the antenna current is below a first predetermined value; and wherein the controller is configured to decrease the antenna current if the antenna current is above a second predetermined value.

**Fig. 2**

## Description

The present specification relates to systems, methods, apparatuses, devices, articles of manufacture and instructions for wireless communications.

SUMMARY

According to an example embodiment, a wireless communications device, comprising: a first receiver input configured to be coupled to a first end of an antenna and a first end of a sense resistor; wherein the sense resistor is coupled in series with the antenna; a second receiver input configured to be coupled to a second end of the sense resistor; a controller configured to determine an antenna current (Iant) flowing through the antenna based on a voltage between the first receiver input and the second receiver input; wherein the controller is configured to increase the antenna current if the antenna current is below a first predetermined value; and wherein the controller is configured to decrease the antenna current if the antenna current is above a second predetermined value.

In another example embodiment, the controller is configured to calculate a power loss ratio based on the antenna current (Iant).

In another example embodiment, if the power loss ratio is above a predetermined ratio, then the controller is configured to determine that a first wireless communications device is proximate to the antenna.

In another example embodiment, if the power loss ratio is below the predetermined ratio, then the controller is configured to determine that a second wireless communications device is proximate to the antenna.

In another example embodiment, if the power loss ratio is above a predetermined ratio, then the controller is configured to increase the antenna current (Iant).

In another example embodiment, if the power loss ratio is below the predetermined ratio, then the controller is configured to decrease the antenna current (Iant).

In another example embodiment, if the power loss ratio is above two, then the controller is configured to determine that a smartphone is proximate to the antenna.

In another example embodiment, if the power loss ratio is below two, then the controller is configured to determine that a smart-card is proximate to the antenna.

In another example embodiment, the controller is configured to calculate the power loss ratio as equal to P(I,loaded)/P(I,unloaded), where: P(I,loaded) = Pin(loaded)-Pant(loaded), and P(I,unloaded) = Pin(unloaded)-Pant(unloaded).

In another example embodiment, the controller is configured to operate in a differential mode using both the first receiver input and the second receiver input for determining the antenna current (Iant).

In another example embodiment, the controller is configured to operate in a single-ended mode using only the second receiver input for wireless communications with a smart-device.

In another example embodiment, the antenna is a coil configured to communicate using near-field signals.

In another example embodiment, further comprising: a first transmitter output configured to be coupled to the second end of the sense resistor; and a second transmitter output configured to be coupled to a second end of the antenna.

In another example embodiment, further comprising: a wireless charging coil configured to charge the wireless device.

In another example embodiment, the wireless charging coil is physically next to the antenna.

In another example embodiment, the wireless charging coil is physically overlaps with the antenna.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

BRIEF DESCRIPTION OF THE DRAWINGS

Figure 1 represents a first example of a wireless communications device.
Figure 2 represents a second example of the wireless communications device.
Figure 3 represents a third example of the wireless communications device.
Figure 4 represents a fourth example of the wireless communications device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

DETAILED DESCRIPTION

Battery powered wirelessly connected smart-devices (e.g. a smartphone, a smart-card, etc.) are ubiquitous and thus hosted by many platforms such as vehicles, buildings and furnishings. Typically these platforms have an embedded pad, tray, surface, etc. for communicating with and charging these wireless devices placed upon them.

In some examples, these wireless devices communicate using NFC (near-field communications) and are charged according to a "Qi-charging" standard.

To support communications and charging these embedded pads, trays, surfaces, etc. include one antenna for wireless communications and a separate set of charging coils for wireless charging. Both the antenna and coils are typically quite large to enable user flexibility when placing the wireless devices on them.

These large antennas and coils are also placed very closely together and/or on top of each other. Such close spacing results at least in a strong detuning of the communications antenna, resulting in a weak RF signal at the wireless device's communications receiver.

Q-charging technology presents a potential risk to physical cards placed in close proximity during the charging process. In some instances the cards can be damaged and become non-functional. This issue requires a robust detection mechanism to prevent damage and ensure safe operation. The device that is being charged (e.g. mobile phone) may act as a shield, impending communication with and detection of the card. Detection of a vulnerable smart-card under a smartphone is often problematic. To address these scenarios and detect the smart-cards is important to use higher TX power.

Now discussed are various example embodiments of circuits for automatic power adjustment (APA) that are responsive to the different types of wireless devices placed on such embedded pads, trays, surfaces, etc. so as to both enable communications and charging with these wireless devices, while also not damaging them.

APA as discussed herein for example: enables smart-card protection; allows for a more relaxed antenna design; controls maximum power transmitted; boosts power only if the RF field is too low; avoids too high an RF field strength if only a smart-card is placed nearby; and compensates for any RF field shielding due to overlapping devices.

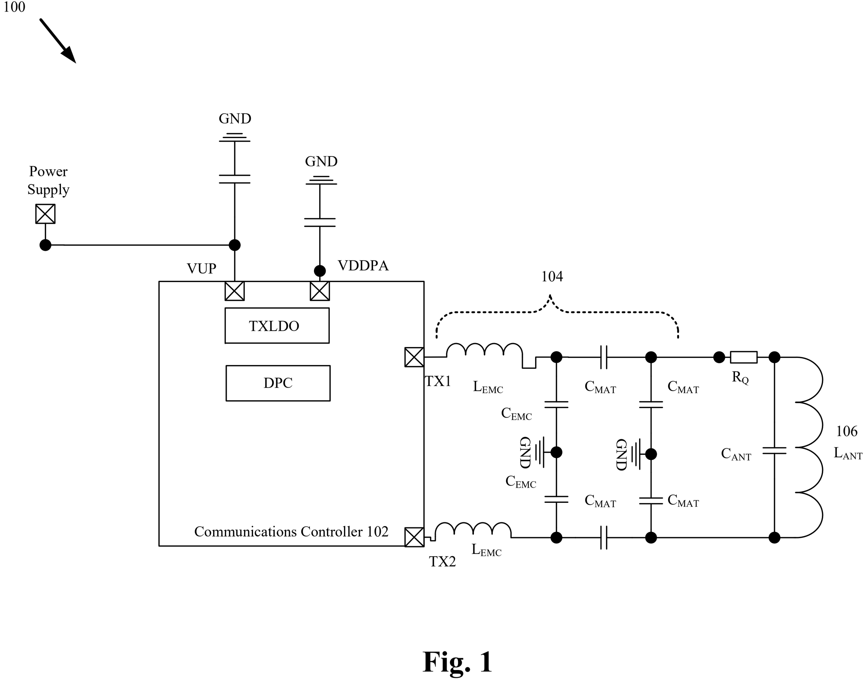

Figure 1 represents a first example 100 of a wireless communications device. The first example device 100 includes a communications controller 102, a tuning circuit 104, an antenna 106, and a power supply.

In the first example device 100, a TXLDO in the communications controller 102 senses a TX (transmit) current between pins TX1 and TX2. A power controller (DPC) in the communications controller 102 then adjusts the antenna's 106 transmit power (Pant/RF field strength) so as to keep Pant within a defined operational range. For example, the DPC could reduce a voltage between pins TX1 and TX2 to set a minimum Pant power that still enables wireless communications with an NFC smart-card device while preventing the NFC smart-card from being damaged by too much Pant power (e.g. by limiting the field and therefore not exciting maximum field limits specified by application requirements or standards.).

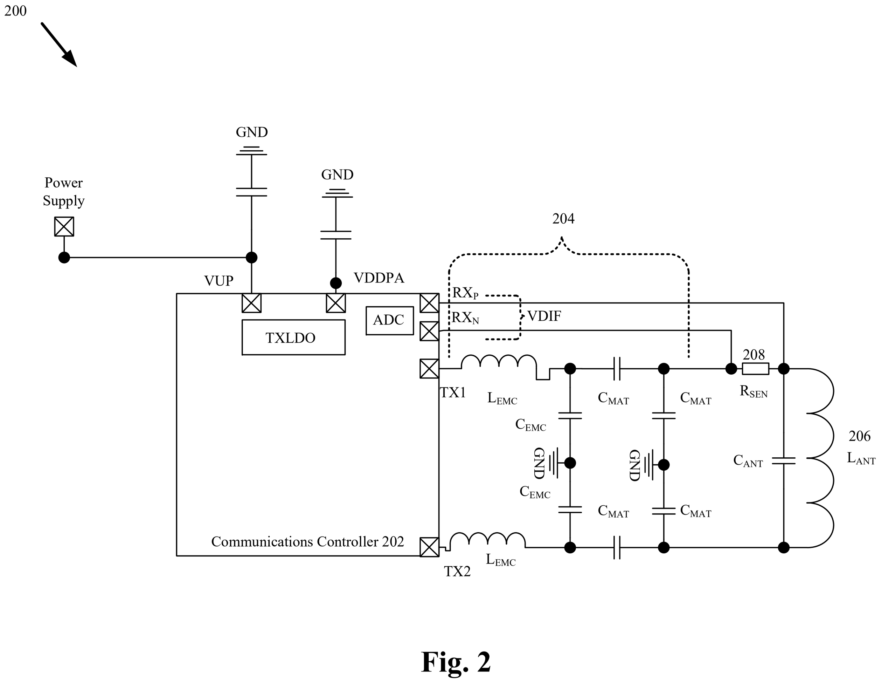

Figure 2 represents a second example 200 of the wireless communications device. The second example device 200 includes a communications controller 202, a tuning circuit 204, an antenna 206, and a power supply. The second example device 200 also includes a first receiver input (RXp) and a second receiver input (RXn) respectively coupled to each end of a sense resistor 208 (Rsen).

Note, only the circuit for wireless communications (e.g. NFC) is shown. A separate circuit (not shown) performs wireless charging (e.g. Qi standard).

The communications controller 202 is configured to determine an antenna current (Iant) flowing through the antenna 206 based on a voltage difference (VDIF) between the first receiver input (RXp) and the second receiver input (RXn). The communications controller 202 is then configured to increase the antenna current (Iant) (i.e. increase transmit power (Pout/Pant)) if the antenna current is below a first predetermined value, and decrease the antenna current (Iant) (i.e. decrease transmit power (Pout/Pant)) if the antenna current is above a second predetermined value.

By measuring the real antenna current (Iant) using RXp and RXn instead of, or in addition to, transmit current using TX1 and TX2, the communications controller 202 performs automatic power adjustment (APA) that enables robust wireless communications with various types of smart-devices even in very close coupling scenarios (e.g. zero distance) that de-tune the wireless communications (e.g. NFC) antenna 206.

Without APC, detuning of the communications antenna 206 would lead to a high measured transmit current (i.e. using TXLDO and pins TX1 and TX2), but to a weak antenna current (Iant). If the antenna current (Iant) gets too low, it would increase a driver voltage, regardless of the high TXLDO current.

The communications controller 202 is configured to operate in a differential mode using both the first receiver input (RXp) and the second receiver input (RXn) for determining the antenna current (Iant). The communications controller 202 is configured to operate in a single-ended mode using only the second receiver input (RXn) for just wireless communications with a smart-device (not shown).

The communications controller 202 is triggered when a smart-device (not shown) is placed proximate to the antenna 206.

To determine a type of smart-device (e.g. smartphone, smart-card, etc.) placed on the antenna 206, the communications controller 202 measures a differential voltage (VDIF) around the sense resistor (Rsen) 208 and from that calculates a power loss ratio (Pl,r).

Power loss ratio (Pl,r) = P(l,loaded)/P(l,unloaded), where:

$$P(l,loaded) = Pin(loaded) - Pant(loaded);$$

$$P(l,unloaded) = Pin(unloaded) - Pant(unloaded);$$

Pin (power input) = VDDPA • transmit current (measured by TXLDO between TX1 and TX2);

VDDPA is the output of the TXLDO and the transmitter supply, and VUP is the input supply voltage for the TXLDO

$$Pant\ (antenna\ power) = Rsen \cdot VDIF*2\ ;$$

and

VDIF is the voltage difference between the first receiver input (RXp) and the second receiver input (RXn).

In various example embodiments, if the power loss ratio (Pl,r) is 2 or more (e.g. 2.17, 2.13 or 2.32) then a smartphone has been placed on or proximate to the antenna 206, and if the power loss ratio (Pl,r) is less than 2 (e.g. 1.48 and 1.5) then a smart-card has been placed on or proximate to the antenna 206.

As mentioned above, Pant is calculated by the controller 202 using the RXp/RXn differential voltage (VDIF) around Rsen.

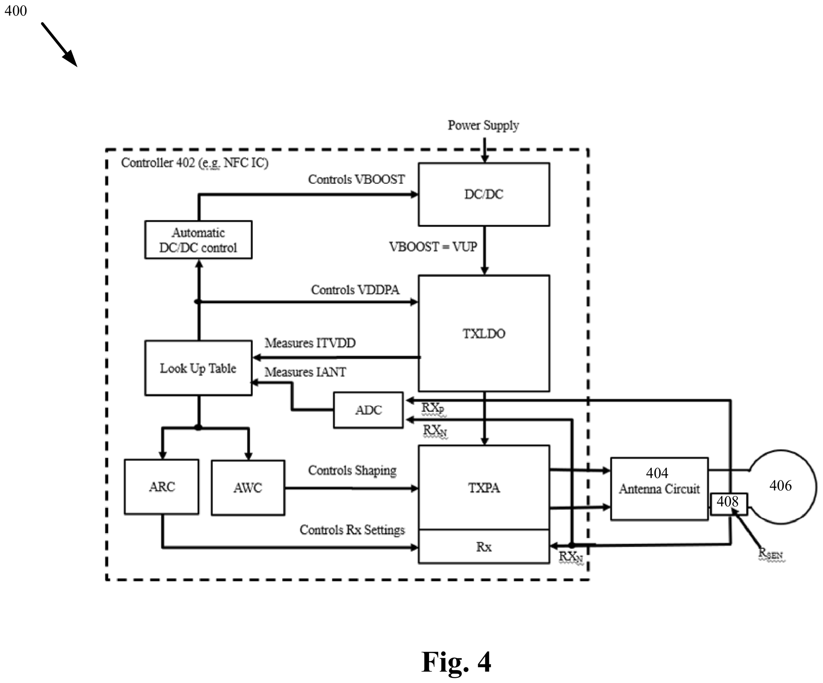

In some example embodiments, Pant is calculated by measuring an I and Q outputs of an ADC (analog to digital converter) within the communications controller 202 and coupled to receive the RXp/RXn inputs (also see Figure 4 below). An amplitude (A) of the received signal calculated as: A = sqrt(12/Q2).

The amplitude (A) is correlated with the actual differential voltage (VDIF) around the sense resistor Rsen 208. By measuring Pant (i.e. the power at the antenna), a power loss from the transmitter to the antenna can be calculated using the Power loss ratio (Pl,r). The Power loss ratio (Pl,r) is then used to determine if the wirelessly connected device includes a smartphone or is just a smart-card as mentioned above.

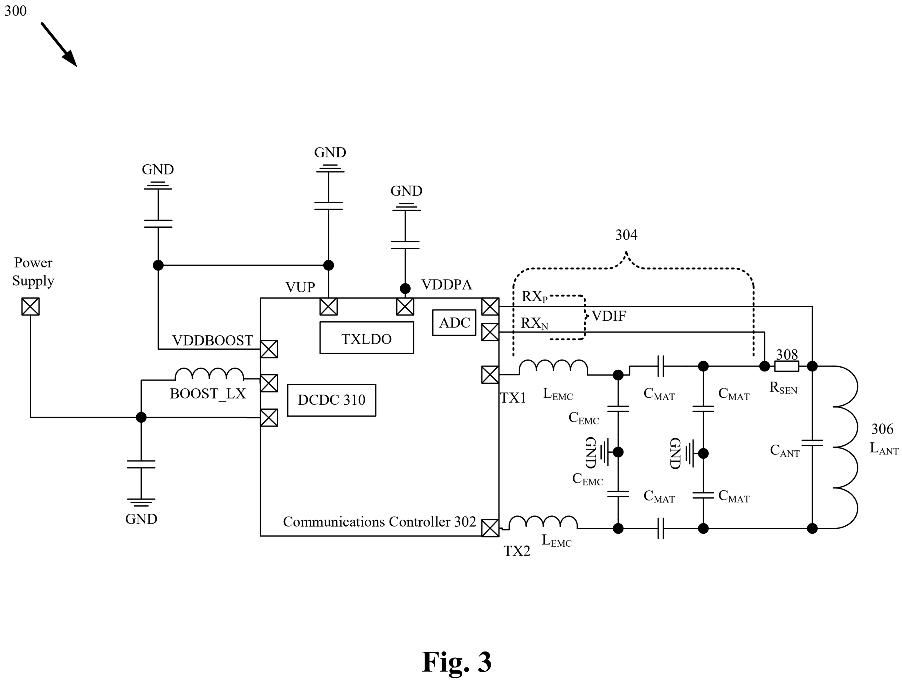

Figure 3 represents a third example 300 of the wireless communications device. The third example device 300 includes a communications controller 302, a tuning circuit 304, an antenna 306, and a power supply. The third example device 300 also includes a first receiver input (RXp) and a second receiver input (RXn) respectively coupled to each end of a sense resistor 308 (Rsen).

The communications controller 302 is configured to determine an antenna current (Iant) flowing through the antenna 306 based on a voltage difference (VDIF) between the first receiver input (RXp) and the second receiver input (RXn).

The third example device 300 is substantially similar to the second example device 200 except now further including a DCDC boost circuit 310 to boost the antenna current (Iant) depending upon whether the communications controller 302 is in a differential mode (see Figure 2) or a single-ended mode (see Figure 2).

Here the communications controller 302 is configured to select different RSSI targets for the differential mode than for the single-ended mode due to each mode's different voltage levels.

Figure 4 represents a fourth example 400 of the wireless communications device. The fourt example device 400 includes a communications controller 402, a tuning circuit 404, an antenna 406, and a power supply. The fourth example device 300 also includes a first receiver input (RXp) and a second receiver input (RXn) respectively coupled to each end of a sense resistor 408 (Rsen).

The communications controller 402 is configured to determine an antenna current (Iant) flowing through the antenna 406 based on a voltage difference (VDIF) between the first receiver input (RXp) and the second receiver input (RXn).

The fourth example device 400 is substantially similar to the third example device 300 except more internal details of the communications controller 402 are shown. Here a look up table (LUT) is implemented to adjust the VDDPA voltage depending on the power loss ratio value calculated from Vdif.

Various example embodiments of the communications controllers 202, 302, 402 just discussed can be implemented in whole or in part using logic gates, application specific chips, firmware, software instructions stored in a non-transitory computer-readable or computer-usable medium and/or other hardware or software.

It will also be readily understood that the elements of the various example embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

**Claims**

1. A wireless communications device, comprising:

   a first receiver input configured to be coupled to a first end of an antenna and a first end of a sense resistor; wherein the sense resistor is coupled in series with the antenna;
   a second receiver input configured to be coupled to a second end of the sense resistor;
   a controller configured to determine an antenna current (Iant) flowing through the antenna based on a voltage between the first receiver input and the second receiver input;
   wherein the controller is configured to increase the antenna current if the antenna current is below a first predetermined value; and
   wherein the controller is configured to decrease the antenna current if the antenna current is above a second predetermined value.

2. The device of claim 1:
   wherein the controller is configured to calculate a power loss ratio based on the antenna current (Iant).

3. The device of claim 2:
   wherein if the power loss ratio is above a predetermined ratio, then the controller is configured to determine that a first wireless communications device is proximate to the antenna.

4. The device of claim 3:
   wherein if the power loss ratio is below the predetermined ratio, then the controller is configured to determine that a second wireless communications device is proximate to the antenna.

5. The device of any one of claims 2 to 4:
   wherein if the power loss ratio is above a predetermined ratio, then the controller is configured to increase the antenna current (Iant).

6. The device of claim 5:

wherein if the power loss ratio is below the predetermined ratio, then the controller is configured to decrease the antenna current (Iant).

7. The device of any one of claims 2 to 6:
wherein if the power loss ratio is above two, then the controller is configured to determine that a smartphone is proximate to the antenna.

8. The device of claim 7:
wherein if the power loss ratio is below two, then the controller is configured to determine that a smart-card is proximate to the antenna.

9. The device of any one of claims 2 to 8:
wherein the controller is configured to calculate the power loss ratio as equal to P(I,loaded)/P(I,unloaded), where: P(I,loaded) = Pin(loaded)-Pant(loaded), and P(I,unloaded) = Pin(unloaded)-Pant(unloaded).

10. The device of any preceding claim:
wherein the controller is configured to operate in a differential mode using both the first receiver input and the second receiver input for determining the antenna current (Iant).

11. The device of claim 10:
wherein the controller is configured to operate in a single-ended mode using only the second receiver input for wireless communications with a smart-device.

12. The device of any preceding claim:
wherein the antenna is a coil configured to communicate using near-field signals.

13. The device of any preceding claim, further comprising:

a first transmitter output configured to be coupled to the second end of the sense resistor; and
a second transmitter output configured to be coupled to a second end of the antenna.

14. The device of any preceding claim, further comprising:
a wireless charging coil configured to charge the wireless device.

15. The device of claim 14:
wherein the wireless charging coil is physically next to the antenna.

100

Power Supply

GND

GND

VUP

VDDPA

TXLDO

DPC

Communications Controller 102

TX1

TX2

$L_{EMC}$

$L_{EMC}$

$C_{EMC}$

$C_{EMC}$

GND

104

$C_{MAT}$

$C_{MAT}$

$C_{MAT}$

$C_{MAT}$

GND

$R_Q$

$C_{ANT}$

106

$L_{ANT}$

# Fig. 1

EP 4 776 519 A1

200

Power
Supply

GND

GND

204

VUP    VDDPA    RX_P

TXLDO    ADC    RX_N    VDIF

TX1    L_EMC    C_MAT    C_MAT    208
R_SEN

C_EMC    C_MAT    C_MAT    206
GND    GND    C_ANT    L_ANT
C_EMC    C_MAT    C_MAT

Communications Controller 202

TX2    L_EMC

**Fig. 2**

8

**Fig. 3**

Power Supply

Controller 402 (e.g. NFC IC)

Controls VBOOST → DC/DC

Automatic DC/DC control

VBOOST = VUP

Controls VDDPA → TXLDO

Measures ITVDD

Look Up Table

Measures IANT

ADC    RX$_P$
       RX$_N$

ARC    AWC    Controls Shaping → TXPA

404 Antenna Circuit    406    408

Controls Rx Settings → Rx    RX$_N$    R$_{SEN}$

**Fig. 4**

**EP 4 776 519 A1**

Europäisches
Patentamt

European
Patent Office

Office européen
des brevets

# EUROPEAN SEARCH REPORT

**Application Number**

EP 25 22 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 287 441 A1 (MOTOROLA INC [US]) 26 August 1999 (1999-08-26) | 1,9-13 | INV. H04B5/26 |
| Y | * paragraph [0006] - paragraph [0008] * <br> * figure 4 * | 2-8,14, 15 | H04B5/79 H04B1/59 H02J50/10 |
| Y | CN 119 010 242 A (BEIJING XIAOMI MOBILE SOFTWARE CO LTD) 22 November 2024 (2024-11-22) * paragraphs [0002], [0069], [0070] * | 2-8 | H04B5/40 |
| Y | US 2021/314028 A1 (WOBAK MARKUS [AT] ET AL) 7 October 2021 (2021-10-07) * paragraphs [0042], [0046] * * figure 6 * | 14,15 | |
| A | US 2018/276426 A1 (BIENERT RENKE [DE]) 27 September 2018 (2018-09-27) * paragraph [0016] - paragraph [0018] * * figure 1 * | 1 | |
| A | US 2019/379425 A1 (LEE KYUNG-WOO [KR] ET AL) 12 December 2019 (2019-12-12) * paragraphs [0155], [0186], [0187] * * figures 5,7, 12 * | 1-15 | TECHNICAL FIELDS SEARCHED (IPC) H04B H02J |
| A | US 2013/043835 A1 (YOON JUN [KR]) 21 February 2013 (2013-02-21) * paragraph [0027] * * figures 1-3 * | 1-15 | |

The present search report has been drawn up for all claims

| Place of search | Date of completion of the search | Examiner |
|---|---|---|
| Munich | 27 April 2026 | Avilés Martínez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 6918

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2026

| Patent document cited in search report | | Publication date | Patent family member(s) | | Publication date |
|---|---|---|---|---|---|
| CA 2287441 | A1 | 26-08-1999 | AU | 2004099 A | 06-09-1999 |
| | | | BR | 9808937 A | 01-08-2000 |
| | | | CA | 2287441 A1 | 26-08-1999 |
| | | | CN | 1252908 A | 10-05-2000 |
| | | | EP | 0976203 A1 | 02-02-2000 |
| | | | JP | 2001520855 A | 30-10-2001 |
| | | | KR | 20010006519 A | 26-01-2001 |
| | | | TR | 199902594 T1 | 21-07-2000 |
| | | | WO | 9943096 A1 | 26-08-1999 |
| CN 119010242 | A | 22-11-2024 | NONE | | |
| US 2021314028 | A1 | 07-10-2021 | CN | 113497641 A | 12-10-2021 |
| | | | EP | 3890196 A1 | 06-10-2021 |
| | | | US | 2021314028 A1 | 07-10-2021 |
| US 2018276426 | A1 | 27-09-2018 | CN | 108649989 A | 12-10-2018 |
| | | | EP | 3379734 A1 | 26-09-2018 |
| | | | US | 2018276426 A1 | 27-09-2018 |
| US 2019379425 | A1 | 12-12-2019 | US | 2017366232 A1 | 21-12-2017 |
| | | | US | 2019379425 A1 | 12-12-2019 |
| | | | WO | 2017217686 A1 | 21-12-2017 |
| US 2013043835 | A1 | 21-02-2013 | KR | 20130019830 A | 27-02-2013 |
| | | | US | 2013043835 A1 | 21-02-2013 |
| | | | US | 2015155740 A1 | 04-06-2015 |

EPO FORM P0459

For more details about this annex : see Official Journal of the European Patent Office, No. 12/82